# EUROPÄISCHE PATENTSCHRIFT

(11) **EP 0 484 778 B1**
(45) Veröffentlichungstag und Bekanntmachung des Hinweises auf die Patenterteilung: **13.09.1995**
(21) Anmeldenummer: 91118326.7
(22) Anmeldetag: 28.10.1991
(51) Int. Cl.: B29C 67/20, B29C 67/04, B29C 33/04, B29C 33/38

(54) **Verfahren zur Herstellung von sandwichartigen Formteilen und Platten, vorwiegend aus textilen Faserstrukturen**
Method for manufacture of sandwich type moulded articles and panels, mainly of textile fiber structures
procédé de fabrication de produits moulés de type sandwich et panneaux de structures principalement en fibres textiles

(30) Priorität: 04.11.1990 DE 4034915
(43) Veröffentlichungstag der Anmeldung: 13.05.1992
(73) Patentinhaber: Kinkel, Werner-Helmut, D-96049 Bamberg (DE)
(72) Erfinder: Vogel, Helmut, Prof. Dipl.-Ing., W-4550 Bramsche 8 (DE); Kinkel, Werner-Helmut, W-8600 Bamberg (DE)

(56) Entgegenhaltungen:
- EP-A- 0 469 309
- EP-A- 0 476 538
- DE-A- 3 841 560
- US-A- 3 762 976
- US-A- 4 781 555
- WORLD PATENTS INDEX LATEST Derwent Publications Ltd, London,GB AN 82-09007E[05], DW8205

## Beschreibung

Die Erfindung betrifft ein Verfahren, sogenannte sandwichartige Formteile und Sandwichplatten vorwiegend durch Druck, Wärme und feuchter Heißluft herzustellen, aus Faserstrukturen mit thermisch unterschiedlichen Eigenschaftsbildern, insbesondere textilen Fasern, dazu vorzugsweise polymereinheitlichen Klebefasern, auch Bikomponentenfasern und Pulvern, oder Fasermischungen aus unterschiedlichen textilen Fasern mit zumindest teilweise thermisch aktivierbaren Eigenschaften bei den eingesetzten Fasertypen, weiter auch organische oder anorganische Faserstrukturen oder Mischungen daraus mit thermplastischen Fasern oder Pulvern als Bindern, alternativ als solche aber auch flüssige Systeme, mit dem Ergebnis zweier weitgehend gleichmäßig stärker verfestigter Deckseiten und einer je nach Werkzeug partiellen oder vollflächigen inneren Struktur mit niedrigerem Raumgewicht.

Ein derartiges Verfahren ist von größtem praktischen Interesse, insbesondere für die Fahrzeugindustrie, da bisher bei der Herstellung von Formteilen in einem Schritt aus vorwiegend polymereinheitlichen Spezialfasern bei den vorgegebenen Wandstärken noch ein großer Fasermaterialaufwand notwendig war, um die wünschenswerte Steifigkeit zu erzielen und dabei Formteile darzustellen mit selbsttragenden dimensionsstabilen Eigenschaften. Dieses Fasergewicht hat sich durch den Materialeinsatz auf den Preis des darzustellenden Formteils natürlich extrem negativ ausgewirkt. Darüber hinaus gibt es bei einem homogenen Aufbau des Trägermaterials bzw. der Platte in bezug auf Schallschluckwirkung nicht so vorteilhafte Eigenschaften, wie sie bei einem progressiven sandwichartigen Aufbau möglich sind. Das beidseitige Verhauten einer Fasermatte mit einem Kalander führt aber durch mangelnden Innendruck normalerweise nicht zu einer ausreichenden Formstabilität der Sandwichplatte im Klimatest.

Aufgabe der Erfindung war es daher, insbesondere für Platten und Formteile ein Verfahren zu entwickeln, welches dem Ziel, niedrigem Gewicht bei gleichen Wandstärken, entgegenkommt und dabei hohe Dimensionsstabilität erreicht. Zusätzlich sollte der Aufwärmzyclus bei Strahlerwärme, Kontaktwärme oder Heißluft und damit auch Taktzeiten bei der Herstellung von Platten und Formteilen abgekürzt, in einem Arbeitsgang ohne Öffnen der Werkzeuge verpreßt und gekühlt werden, um somit ein eigenes Abkühlwerkzeug zu vermeiden.

Gelöst wurde diese Aufgabe dadurch, daß man die vorwiegend textilen Fasermaterialien, die unter Temperatur und Druckeinwirkung verklebende Eigenschaften haben, zu Fasermischungen mit unterschiedlich reagierenden Erweichungspunkten, wie z.B. Normal- und Bikomponentenfasern oder auch normal und sogenannte unverstreckte oder teilverstreckte Klebefasern zusammenfügt, oder auch Fasermischungen unterschiedlicher Natur-, und Polymerwerkstoffe mit unterschiedlichen thermischen Eigensschaftsbild als volumige Matten darstellt, also mit größerer Dicke gegenüber dem erwünschten Endzustand der Platte oder des Formteiles. Diese Fasermatte wird nun zwischen zwei Werkzeughälften mit einem besonderen sinnvollerweise zweischaligen Aufbau gebracht. Hierfür bestand bisher von der Werkzeugseite her schon eine Möglichkeit, die für bestimmte Verfahren notwendig war und nachstehend aufgezeigt wird, wie z.B. Stahlwerkzeuge mit Bohrkanälen, wobei die für das nachstehende beschriebene Verfahren benötigte Gleichmäßigkeit im Luftdurchlaß selten erreicht wird, und darüberhinaus für die anschließende vielfach notwendige Kühlung im selben Werkzeug völlig ungeeignet waren.
Sinnvoll und produktionssicher für Aufheizung und gleichzeitige Kühlungsmöglichkeiten, erscheinen daher insbesondere folgende Werkzeugmaterialien.

Beispiel, Sintermetallwerkzeuge.
Bei diesen Werkzeugen haben die Oberflächen häufig leicht gravierte Strukturen. Das Metallwerkzeug setzt sich an der Oberfläche aus tausenden von Einzelkugeln zusammen, die aneinandergesintert sind, und die auf diese Art und Weise eine absolut homogene Luftdurchlässigkeit auf der ganzen Werkzeugoberfläche gewährleisten. Diese Werkzeuge sind häufig auch heizbar.

Die hier gegebene Gleichmäßigkeit der Werkzeugoberflächen, fluide Medien durchzulassen, ist für das Verfahren entscheidend, vor allem auch im Wechsel zwischen warm und kalt.

In nachfolgender Beschreibung soll dabei die benötigten Werkzeuggestaltungen und die Oberflächen hierfür noch näher aufgezeigt werden.
Das Unterwerkzeug, vorzugsweise auch das Oberwerkzeug, ist dabei jeweils zweischalig aufgebaut und an den Rändern zwischen Ober und Unterwerkzeug durch Lippen abgedichtet, so daß erst über Ventiltechnik feuchte Heißluft in die Zwischenkammer des Unterwerkzeuges strömt, und sich dann gleichmäßig über die gesamte Werkzeugfläche verteilt und durch die Luftdurchgänge an die Oberfläche in die Fasermatte strömt. Das Ventil wird dann geschlossen. Durch die gewählte Temperatur des Dampfes wird in dem geschlossenen Werkzeug ein steuerbarer Überdruck erzeugt, der die textilen Fasern mit einer der Verklebeeigenschaft der Faser angepaßten Aktivierungstemperatur vorwiegend an die Werkzeugoberflächen preßt, ohne daß der Faserverbund ganz verloren geht, und dabei bis zu einer Art Hautbildung führen kann, wobei die Faserstruktur den beabsichtigten sandwichartigen Charakter bekommt. Nach erfolgter Verdichtung können dann diese zusätzlich vorwiegend am Oberwerkzeug befindliche Ventile geöffnet werden, so daß sich der entstandene Überdruck wieder abbaut.

Durch Werkzeugdistanzauslegung sind dabei die für das Endprodukt partiellen oder vollflächigen, geringeren oder stärkere Verdichtungen zu gestalten.

Anschließend läßt sich dann bei noch geschlossenen Preßwerkzeugen über Kaltluft, die über weitere, vorzugsweise getrennte Ventile auf dieselbe Art Werkzeug und Matte durchdringt und dabei über die geöffneten Abluftventile abfließt, die Platte bzw. das Formteil schnell abkühlen und als formstabiles Teil aus dem Werkzeug entnehmen. Selbst eine Kaschierung beim Verpressen mit Oberflächenmaterialien ist denkbar, sofern diese ebenfalls luftdurchlässig sind.

Der von der Temperatur her steuerbare Dampf kann dabei auch gezielt zur zusätzlichen Verdichtung von Teilen der Faserstrukturen eingesetzt werden, um z.B. Copolymer- oder niedrig schmelzende Folien zwischen den Faserlagen (um einseitige starke Festigkeiten zu erzielen) dabei zu zersetzen, aber auch flüssige Systeme, insbesondere Harze, gesteuert ausreagieren lassen.

Werkzeuge, wie oben beschrieben, sind jedoch vergleichsweise teuer, so daß für bestimmte, insbesonders großformatige Formteile oder Platten, sich hier noch eine weitere Werkzeugtechnologie anbieteten, die aber vom Verfahren her deckungsgleich mit dem vorgenannten sind. Hierbei wird z.B. über ein Negativ-Holzhilfswerkzeug die Oberfläche eines ebenfalls zweischaligen Ober- und Unterwerkzeug mit einer der späteren Fasermatte zugeneigten Platte aus Zement, bei dessen Fertigung eine gesättigte Kochsalzlösung eingesetzt wurde, hergestellt. Nachdem das Material abgebunden ist, wird das Kochsalz mit Wasser herausgelöst, so daß eine Werkzeugoberfläche dargestellt wird, welche auf Grund der so erhaltenen gleichmäßigen Porosität von jedem Fluid und Gas durchströmt werden kann. Der Zement selbst läßt sich darüber hinaus mit metallischen Elementen oder polymeren textilen Faserstrukturen zusätzlich verstärken und auch über Rohre beheizen, so daß ein sehr belastbares Werkzeug entsteht.

Weitere ähnliche poröse Werkzeugoberflächen sind mit bestimmten PU-Schaumsystemen, wie auch mit Polymerbeton erreichbar. Entscheidend für die Auswahl der Werkzeugoberflächen ist der benötigte Druck pro cm², die gewünschte Temperatur des Dampfes und die kalkulierte benötigte Lebensdauer.
Ein weiterer Vorteil dieser Verfahrenstechnik liegt darin, daß durch den durch Dampf erzielten Innendruck im Formteil der aperative Aufwand bei Werkzeugen und Pressen von der Investitionsseite her begrenzt werden kann und somit zur Kostensenkung führt.

Um die vorwiegend textilen Faserformteile oder Platten aus dem Werkzeug entnehmen zu können, ist je nach benötigter Temperatur und dem Eigenschaftsbild der Fasern, gegebenenfalls ein Trennmittel auf der Werkzeugoberfläche zu verwenden.
Die technisch heute herstellbaren und benötigten einlagigen Fasermatten oder mehrlagige Faserzuschnitte lassen sich nach verschiedenen Technologien hierbei vom Gewicht und von der Materialzusammensetzung her, je nach Anforderungsprofil der Formteile, durch die vorgegebenen Werkzeugdistanzen exakt eingrenzen, wobei das Gesamtgewicht des Formteils oder der Platte unter dem Flächengewicht bei homogen verpreßten Fasern liegt.

Somit entsteht, insbesondere zur Herstellung von großflächigen Trägerelementen, z.B. Formhimmel in der Automobilindustrie, ein Formteil mit niedrigerem Gewicht, hoher Formstabilität, und soweit polymereinheitliche Fasern verwendet werden, sogar Formteile, die optimal wiederaufbereitet werden können. Zur Erhöhung der Stabilität solcher Formteile und Platten ließe sich darüber hinaus, durch Gestaltung von Sicken und Stegen, noch einmal zusätzliche formstabilisierende Eigenschaften miteinbinden.

## Patentansprüche

1. Verfahren zur Herstellung von sandwichartigen Formteilen und Platten, vorwiegend aus textilen Faserstrukturen, dadurch gekennzeichnet, daß diese durch Druck, Wärme und feuchter Heißluft, aus unterschiedlichen Fasermaterialien, insbesondere aus Fasermischungen aus voneinander abweichenden thermischen Eigenschaftsbildern, thermoplastischen Pulvern und/oder organischen und anorganischen Zuschlagstoffen und durch doppelwandige Werkzeuge mit gleichmäßig durchlässigen porösen Oberflächen verpreßt und dabei, vor allem bei thermoplastischen Fasern, bei Bedarf auch ohne Entlastung des Werkzeugs abgekühlt werden können, und der Dampf zur Erzeugung des Überdrucks innerhalb der Werkzeughälften sowie Kaltluft zum Abkühlen durch gesteuerte Ventiltechnikführung in das Preßwerkzeug integriert ist.

2. Verfahren zur Herstellung von sandwichartigen Formteilen und Platten gemäß Anspruch 1, dadurch gekennzeichnet, daß die dafür benötigten porösen Werkzeugoberflächen aus Metallsinterwerkstoffen, PU-Hartschaum, Polymerbeton, oder Beton, letzterer hergestellt mit gesättigten Kochsalzlösungen die nach dem Aushärten mit Wasser herausgelöst werden, oder aus perforierten oder siebartigen Werkzeugen bestehen.

3. Verfahren zur Herstellung sandwichartiger Formteile und Platten gemäß Anspruch 1 und 2, dadurch gekennzeichnet, daß durch unterschiedliche Werkzeugdistanzauslegungen innerhalb der gesamten Werkzeugfläche geringere oder stärkere Verdichtungen gestaltet werden und dadurch bei den Formteilen und Platten Bereiche mit unterschiedlichem Raumgewicht aufweisen.

4. Verfahren zur Herstellung von sandwichartigen Formteilen und Platten gemäß Anspruch 1 bis 3, dadurch gekennzeichnet, daß vorwiegend durch Verwendung geheizter Werkzeuge die Faserstrukturen durch die warmen Werkzeugoberflächen gleichmäßig verfestigte Deckseiten erhalten

5. Verfahren zur Herstellung sandwichartiger Formteile und Platten gemäß Anspruch 1 bis 4, dadurch gekennzeichnet, daß als textile Faserstrukturen erstens eine thermoplastische Faser und hierzu zweitens mit unterschiedlichen, niedrigeren Aktivierungstemperaturen ausgestattete polymereinheitliche Klebe-, oder Bikomponentenfasern, oder aber hierfür polymereinheitliche Pulver oder eine Mischung dieser verschiedenen Möglichkeiten, verwendet werden.

6. Verfahren zur Herstellung von sandwichartigen Formteilen und Platten gemäß Anspruch 1 bis 5, dadurch gekennzeichnet, daß neben den textilen oder anderen faserigen Strukturen anstatt niedriger schmelzender Fasern oder thermoplastischen Pulvern, oder einer Mischung daraus, flüssige oder pulverige duroplastische Systeme zur Verfestigung eingesetzt werden.

## Claims

1. A process for the production of sandwich-like shaped parts and plates, mainly of textile fiber structures, characterized in that they can be pressed from different fiber materials, in particular from fiber mixtures with thermal properties deviating from each other, thermoplastic powders and/or organic and inorganic additives by means of pressure, heat and humid hot air and by means of double-walled tools with uniformly permeable, porous surfaces and, if necessary, can be cooled there, above all in the case of thermoplastic fibres, also without relieving the tool, and the vapor for generating the excess pressure within the tool halves and cold air for cooling are integrated in the pressing tool by means of a controlled valve technology guiding.

2. A process for the production of sandwich-like shaped parts and plates according to claim 1, characterized in that the porous tool surfaces required for this consist of sintered metall materials, rigid polyurethane foam, polymer concrete or concrete, the latter produced with saturated sodium chloride solutions which are dissolved out with water after curing, or of perforated or sieve-like tools.

3. A process for the production of sandwich-like shaped parts and plates according to claims 1 and 2, characterized in that, due to different tool spacing designs within the entire tool surface, lower or higher compressions can be achieved, and due to this, the shaped parts and plates have regions with different relative densities.

4. A process for the production of sandwich-like shaped parts and plates according to claims 1 to 3, characterized in that the fiber structures are provided with uniformly solidified cover faces due to the warm tool surfaces mainly thanks to the use of heated tools.

5. A process for the production of sandwich-like shaped parts and plates according to claims 1 to 4, characterized in that, as textile fiber structures, a thermoplastic fiber is used in the first place and, in addition to this, polymer-homologous adhesive or bicomponent fibers having different lower activation temperatures can be used or, however, instead of this, polymer-homologous powders or a mixture of these different possibilities can be used.

6. A process for the production of sandwich-like shaped parts and plates according to claims 1 to 5, characterized in that, in addition to the textile or other fibrous structures, liquid or powdery duroplastic systems can be used for solidification instead of low melting fibers or thermoplastic powders or a mixture thereof.

## Revendications

1. Procédé de fabrication de pièces moulées et panneaux sandwich constitués principalement par des structures fibreuses textiles, caractérisé en ce que ces pièces moulées et panneaux, composés de matériaux fibreux, en particulier de mélanges fibreux ayant des propriétés thermiques divergentes les unes des autres, de poudres thermoplastiques et/ou d'additifs organiques et inorganiques, peuvent être comprimés à la pression, à la chaleur ou à l'air chaud humide et grâce à des outils à double montant présentant des surfaces poreuses uniformément perméables et peuvent ici, surtout dans le cas de fibres thermoplastiques, être au besoin aussi refroidis sans avoir à décharger l'outil, et en ce que la vapeur destinée à produire la surpression à l'intérieur des moitiés de l'outil, ainsi que l'air froid destiné au refroidissement sont intégrés dans l'outil de compression grâce à un guide de soupape commandé.

2. Procédé de fabrication de pièces moulées et panneaux sandwich selon la revendication 1, caractérisé en ce que les surfaces poreuses d'outils nécessaires sont constituées par des matériaux métalliques frittés, de la mousse polyuréthanne rigide, du béton polymère ou du béton, ce dernier étant fabriqué avec de l'eau salée saturée qui est éliminée à l'eau après le durcissement, ou par des outils perforés ou en forme de tamis.

3. Procédé de fabrication de pièces moulées et panneaux sandwich selon les revendications 1 et 2, caractérisé en ce que grâce à la conception de différents écartements d'outil à l'intérieur de la surface totale de l'outil, on peut réaliser des compressions plus faibles pour plus fortes et grâce à cela, les pièces moulées et les panneaux présentent des régions de densité différente.

4. Procédé de fabrication de pièces moulées et panneaux sandwich selon les revendications 1 à 3, caractérisé en ce qu'en utilisant principalement des outils chauffés, les structures fibreuses reçoivent, grâce aux surfaces chaudes des outils, des faces de recouvrement uniformément solidifiées.

5. Procédé de fabrication de pièces moulées et panneaux sandwich selon les revendications 1 à 4, caractérisé en ce qu'on utilise comme structures fibreuses textiles premièrement une fibre thermoplastique et pour cela, deuxièmement des fibres biconstituantes ou adhésives homogènes en polymères, pourvues de températures d'activation basses différentes, ou bien pour cela des poudres homogènes en polymères ou un mélange de ces différentes possibilités.

6. Procédé de fabrication de pièces moulées et panneaux sandwich selon les revendications 1 à 6, caractérisé en ce qu'en plus des structures textiles ou autres structures fibreuses, à la place de fibres à fusion plus basse ou de poudres thermoplastiques ou d'un mélange de celles-ci, on utilise pour la solidification des systèmes thermodurcissables liquides ou pulvérulents.
